# EUROPEAN PATENT SPECIFICATION

(11) **EP 1 894 211 B1**
(45) Date of publication and mention of the grant of the patent: **29.07.2009**
(21) Application number: 06741640.4
(22) Date of filing: 12.06.2006
(51) Int. Cl.: H01B 3/00, H01B 17/42, H01C 7/112, H02K 3/40

(54) **VARISTOR-BASED FIELD CONTROL TAPE**
FELDSTEUERBAND AUF VARISTORBASIS
BANDE DE COMMANDE DE CHAMP À BASE DE VARISTANCES

(30) Priority: 21.06.2005 EP 05405395
(43) Date of publication of application: 05.03.2008
(73) Proprietor: ABB RESEARCH LTD., 8050 Zürich (CH)
(72) Inventor: DONZEL, Lise, CH-5430 Wettingen (CH); KORNMANN, Xavier, Lauchringen (DE); GREUTER, Felix, CH-5406 Rütihof (CH)
(74) Representative: ABB Patent Attorneys
(86) International application number: PCT/CH2006/000315
(87) International publication number: WO 2006/136040

(56) References cited:
- EP-B- 0 875 087
- EP-B- 0 992 042
- EP-B- 1 118 086
- DE-A1- 2 233 204
- DE-A1- 19 860 412

## Description

### TECHNICAL FIELD

The invention relates to the field of high and medium voltage technology and, in particular, to nonlinear electrical materials and devices. The invention is based on nonlinear electrical tapes and on electric apparatuses comprising such nonlinear electrical tapes according to the preamble of the independent claims.

### BACKGROUND OF THE INVENTION

The invention starts from the prior art as described in EP 1 118 086 B1. Therein, a glow protection band or corona shielding band with improved electrical properties is disclosed, that is used in the winding insulation of an electrical machine. The band comprises a fabric-like carrier material that is impregnated with a solution of a reaction resin containing filler particles that are coated with antimony-doped tin oxide (SnO₂). Optionally a hardening agent and/or an accelerator can be added. The coated filler particles provide a more reliable and better reproducible nonlinear electrical behaviour compared to the conventionally used silicium carbide (SiC) filler. The coated filler system is specifically designed to be relatively light-weight to avoid particle sedimentation during compounding while providing sufficient nonlinearity in electrical resistivity. For this purpose, inorganic substrate filler materials of low density are chosen, such as Al₂O₃, SiO₂, TiO₂, BaSO₄, chalk, talcum, kaolin, mica or titanates, and electrical nonlinearity is added by coating the substrate filler particles with the much heavier doped tin oxide coating. The coating is brought onto the substrate- or seed-particles by means of hydrolyse or thermal decomposition of organic slurry. Obviously, such a complex, coated filler system is difficult to manufacture.

In DE 2 233 204 a glow protection tape of semiconductive material is disclosed for use in an insulated high-voltage winding of an electric machine. The tape may consist of a woven glass impregnated with graphite particles. The tape can be pre-stretched, heat-treated and is shrinkable in longitudinal direction. The tape is wound around a glass-mica band protecting a copper conductor winding. It is designed to replace a carrier band that is surface-coated with a glow-protection lacquer.

In U. S. Pat. No. 4,297,250 a method of making a doped zinc oxide (ZnO) varistor powder composition is disclosed. The ZnO powder can be dispersed in a resinous medium to provide a ZnO stress grading varnish composition. The varnish may be applied as paint to coils or other high voltage insulated conductors. The ZnO powder can also be fired onto a ceramic article such as a bushing.

In the article by R. Strümpler, P. Kluge-Weiss and F. Greuter, "Smart Varistor Composites", Proceedings of the 8th CIMTBC-World Ceramic Congress and Forum on New Materials, Symposium VI (Florence, June 29 - July 4, 1994) a composite comprising doped ZnO microvaristor powder embedded in a polymer matrix is disclosed.

In EP 0 875 087 B1, as well, an electrical stress-controlling composition is prepared from doped zinc oxide (ZnO) filler particles embedded in a polymer matrix. The composition is specified such that only round or smoothly shaped spheroid particles are used and that a majority of the particles has a maximum dimension of between 5 µm and 100 µm. The compound can be processed to form various stress-controlling products, e.g. field grading sleeves in medium voltage cable terminations and joints.

### BRIEF SUMMARY OF THE INVENTION

It is a general object of the invention to provide a nonlinear electrical tape showing favourable nonlinear electrical properties and being easy to manufacture, an electrical component comprising such a nonlinear electrical tape, and a medium or high voltage apparatus comprising such a component. This object is achieved according to the invention by the subject-matter as set forth in the independent claims.

The invention consists in a nonlinear electrical tape for electrical devices, in particular for electrical high-voltage apparatuses, comprising a substrate that is impregnated with a binder containing inorganic filler particles, wherein the filler particles comprise microvaristor particles containing doped zinc oxide (ZnO). The nonlinear electrical tape based on ZnO microvaristors has several advantages over known field control tapes. Compared to conventional tapes with embedded SiC particles, a stronger and more reliable nonlinear resistivity is achieved. Compared to tapes containing doped-ZnO coated particles, ZnO microvaristors are much simpler to produce, have a markedly reduced density and hence improved processability, and have a clearly more pronounced electrical nonlinearity.

The exemplary embodiment in claim 2 shows preferable properties and applications of the field grading tape.

In the exemplary embodiments according to claims 3-6 favourable design parameters of the ZnO microvaristor particles are identified. These encompass measures to obtain light-weight particles and specific choices of particle size distributions and particle shapes for optimising nonlinear field grading tapes based on doped ZnO microvaristors.

In the exemplary embodiments according to claims 7-11 favourable choices of shape, material and preparation of the substrate and binder, respectively, of the tape are given.

Furthermore, the invention consists according to independent claims 12 and 14 in any electrical component or device making use of the above specified nonlinear electrical tape for dielectric insulation, overvoltage protection and/or field control purposes.

Further embodiments; advantages and applications of the invention will become apparent from claims or claim combinations and when consideration is given to the following detailed description.

### DETAILED DESCRIPTION OF THE INVENTION

Field control is needed for coils of motor and generator, cables, bushings and whenever an insulated conductor passes through a grounded concentric screen. For such and other purposes, the invention provides a nonlinear electrical tape for electrical devices, in particular for electrical high-voltage apparatuses, which tape comprises a substrate that is impregnated with a binder, e.g. an epoxy resin, containing inorganic filler particles, wherein the filler particles comprise microvaristor particles containing doped zinc oxide (ZnO).

The tape containing ZnO microvaristors according to invention compares favourably in many respects with conventional tapes based on embedded SiC particles or doped-SnO coated particles. The nonlinear properties of the SiC tapes depend on contact phenomena between SiC-SiC particles and are thus strongly dependent on SiC grade, on tape processing and handling conditions, and on tape degradation under voltage overload. In contrast, the nonlinearity of the doped ZnO is an effect produced by the built-in grain boundaries, is hence an intrinsic property and is therefore robust against processing conditions and aging effects. ZnO filler particles are less abrasive than silicium carbide filler particles. Furthermore, ZnO based materials have higher nonlinearity coefficients α>10 than SiC based materials having a in the range of 3...5. This means that dielectric losses can be reduced at normal operating conditions without losing overvoltage protection at impulse, or, alternatively, dielectric losses can be kept constant at normal operating conditions and impulse withstand capability, in particular impulse withstand voltages, can be increased.

Compared to tapes containing doped-SnO coated particles, doped ZnO microvaristors are obviously simpler to produce, in that standard processes of doping and sintering can be applied and tedious processing steps, such as coating of seed particles with doped and sintered varistor material, are avoided. Furthermore, ZnO microvaristors have a lower material density than SnO₂, namely 5.6 g/cm³ instead of 7.0 g/cm³. In addition, ZnO microvaristor particles can be produced to be more or less porous and, in particular, can be in the shape of hollow spheres such that their apparent or average density, defined as the weight of the particles devided by their enclosed volume, may substantially be further reduced. This results in reduced danger of sedimentation and demixing during compounding filler and binder and during impregnating the tape with the compounded binder. Finally, ZnO microvaristors have a superior electrical nonlinearity. Reported nonlinearity coefficient α range from 3 to .34 for SnO₂, compared to 50 to 200 for ZnO. Overall, doped ZnO microvaristor tapes are simpler to produce and show more favourable electrical poperries than hitherto known nonlinear field control tapes.

In the following, exemplary embodiments of the invention are discussed.

The tape can be a flexible tape, preferably with at least one surface being self-adhesive, for applying the tape on electrical components. The tape can preferably be applied in field-stress regions of electrical components and provides a nonlinear electrical field control by means of its embedded doped ZnO microvaristor particles.

The doped ZnO microvaristor particles are at least partially hollow particles with an average density below the specific material density of ZnO, which is 5.6 g/cm³. Preferably, the doped ZnO microvaristor particles are hollow particles that are produced buy granulation techniques, e.g. spray-drying with or without blowing agent, sol-gel processing, spray pyrolysis, coating of preprocessed polymer, or fluidised bed process technique. Production of such granulated hollow ZnO microvaristor particles is disclosed e.g. in the aforementioned article by R. Strümpler et al.. According to this article, particles produced by spray-drying have sizes up to 300 µm and are sieved to particle sizes up to 200 µm.

In contrast, in the invention, particularly small-sized hollow ZnO microvaristors shall be produced and used such that the smoothness and flexibility of the tape is not compromised. Advantageously, the doped ZnO microvaristor particles have a particle size distribution with maximum dimensions smaller than 90 µm, preferred smaller than 80 µm, more preferred smaller than 70 µm, further more preferred smaller than 60 µm, most preferred smaller than 50 µm. In particular, the doped ZnO microvaristor particles have a particle size distribution with maximum dimensions smaller than 40 µm, preferred smaller than 30 µm, more preferred smaller than 20 µm.

According to the invention, the production parameters of the granulation, e.g. rotary disk atomisation, shall be adjusted to such an extent that small hollow particles, preferentially with maximum dimensions below 40 µm, are generated. It is further anticipated that the production yield will decrease for very small diameters in the range of 30 µm to 10 µm or below. Thus, taking into account a decreasing powder production yield and an improved tape smoothness and flexibility with decreasing particle size, an optimum ZnO microvaristor particle size distribution for nonlinear field grading tapes shall be in the range of 10 µm to 50 µm, preferred 20 µm to 40 µm, particularly at 30 µm.

With advantage, in the binder, at least 70%, preferred at least 80%, more preferred at least 90% of the inorganic filler particles are doped ZnO microvaristor particles. The doped ZnO microvaristor particles have a Gaussian or bimodal particle size distribution. Such Gaussian and bimodal particle size distributions are disclosed in EP 0 992 042 (WO 99/56290). In EP 0 992 042 it is also disclosed that the filler can comprise electrically conductive particles fused to the surface of the microvaristor particles, wherein the electrically conductive particles form direct electrical low resistance contacts between the microvaristor particles.

Furthermore, two filler components with different nonlinear current-voltage characteristic may be used, as disclosed in EP 1 274 102 A1. In the present invention, at least one of the filler components must be doped ZnO microvaristors and preferably all filler components shall be based on ZnO particles with different dopings. In contrast to EP 1 274 102 A1, however, doped SnO₂ shall not be added as a filler component because of its too large density causing sedimentation and demixing during compounding.

It is possible to specify the ZnO powder for compounding in the binder such that it comprises at least two ZnO particle fractions. A first fraction of the doped ZnO microvaristor particles can have smooth, preferably spherical shapes and the particles for the first fraction have been calcinated and subsequently separated, in particular the necks are broken up, such that the particles retain their original, predominantly spherical shape. A second fraction of the doped ZnO microvaristor particles can have irregular, in particular spiky shapes and the particles for the second fraction have been produced by calcinating or sintering and subsequently fracturing or produced in a way such that the particles have irregular, in particular spiky, shapes. Such multi-fractional ZnO microvaristor particle compositions are disclosed in the not yet published European Patent. Application No. 04405210.8.

The production method of the ZnO filler is explained in more detail in this application. The granular powder is typically produced by spray drying a slurry comprising ZnO and doping additives. This production step brings about solid or hollow granules or particles with predominantly spherical shape. The green granules are heat treated to obtain microvaristor granules with nonlinear electrical properties. The term calcination refers to a heat treatment of a bed of loose granules which are more or less baked together, typically by forming necks bridging the particles. Alternatively the granules can be calcinated in a rotary kiln, which reduces the neck formation. The calcinated agglomerate, and in particular the necks, can be broken-up by using little force only. This preserves the original spherical shape of the particles. In contrast, the term sintering relates to a compacted and heat treated fully densified ceramic block. This block must be crushed to get fractured irregular particles. The irregular particles can also be obtained from a calcinated powder by feeding, the spherical microvaristor powder particles for example through a double-disc mill with a slit smaller than the smallest dimension of the intact particles. The preferred sizes of the particles are selected typically by classification techniques, e.g. sieving or air separation. The process of mixing the microvaristors powder into the binder is called compounding. Solvent and/or hardening agent and/or accelerator can be added to the binder.

In summary, it is possible to produce ZnO microvaristor powder by granulation methods and in particular spray drying, as discussed above, subsequent calcinating and then desagglomeration or crushing. It is also possible to produce the particles by crushing sintered ZnO varistor ceramic blocks or, alternatively, by crushing of a calcined or sintered tape (tape casting). The particles shall be full spheres or preferentially hollow spheres, may comprise a mix of spherical and spiky particles or of particles with different nonlinear current-voltage characteristics and have a granulometry from approximately 10 µm to below 90 µm.

With respect to the tape, the substrate can be in the form of a sheet and preferably a band. The substrate shall be flexible and can be made in the form of a film, a perforated film, a woven fabric or a fleece. Typically, the substrate is chosen to be electrically insulating. It can contain glass and/or polymer, preferably polyester. In a useful embodiment, the substrate is made of a polymer and is heat-shrinkable.

The binder can be among the group of epoxies and silicones. It can be a thermoplastic or a duromer. The binder in the tape can be in a pre-cured B-stage or in a fully-cured C-stage. The binder being in B-stage may add stickiness to the tape. The binder being in C-stage facilitates handling of the tape for further processing. In a further step the tape is applied to an electrical component. This component is further treated, e.g. by further impregnation and heat treatment. Examples are resin rich processing and vacuum pressure impregnation. If the tape has binder in B-stage, a precuring step is needed in order to prevent loosing microvaristor particles during the further impregnation of the electrical component.

The invention relates also to an electrical component or device, in particular a medium- or high-voltage component or device, such as an electric insulation device, electrical overvoltage device or electrical field control device, that comprises a nonlinear electrical tape, in particular a field control tape, as disclosed above. Examples of such electrical components are a conductor bar, e.g. motor bar or generator bar, or a cable termination, machine insulation, transformer insulation, support insulator, bushing or a field control means. Examples of such electrical devices are medium- or high-voltage apparatuses, e.g. a disconnector, circuit breaker, transformer, capacitor, inductor,' instrument transformer, cable, or electrical machine.

Such component or device according to invention contains a nonlinear field control tape that comprises a substrate that is impregnated with a binder containing inorganic filler particles that comprise doped zinc oxide (ZnO) microvaristor particles.

In a preferred embodiment, the tape is a flexible tape with at least one surface being self-adhesive for applying the tape in a field-stress region of the electrical component or device and there performs a nonlinear electrical field control by means of its embedded doped ZnO microvaristor particles; and/or the doped ZnO microvaristor particles are hollow particles having a particle size distribution with maximum dimensions smaller than 70 µm, preferred smaller than 50 µm, more preferred smaller than 30 µm.

## Claims

1. Tape with nonlinear electrical properties for electrical devices, in particular fox electrical high-voltage apparatuses, comprising a substrate that is impregnated with a binder containing inorganic filler particles, **characterized in that** the filler particles comprise microvaristor particles containing doped zinc oxide (ZnO).

2. The tape as claimed in claim 1,
**characterized in that**
a) the tape is a flexible tape, in particular with at least one surface being self-adhesive, for applying the tape on electrical components and/or
b) the tape is suitable for application in a field-stress region of the electrical component and provides a nonlinear electrical field control by means of its embedded doped ZnO microvaristor particles.

3. The tape as claimed in any of the preceding claims, **characterized in that**
a) the doped ZnO microvaristor particles comprise hollow particles with an average density below 5.6 g/cm³ and
b) in particular that the doped ZnO microvaristor particles are hollow particles that are produced by granulation, preferably spray-drying.

4. The tape as claimed in any of the preceding claims, **characterized in that**
a) at least 70%, preferred at least 80%, more preferred at least 90% of the inorganic filler particles are doped ZnO microvaristor particles and/or
b) the doped ZnO microvaristor particles have a Gaussian or bimodal particle size distribution.

5. The tape as claimed in any of the preceding claims, **characterized in that** the doped ZnO microvaristor particles have a particle size distribution with maximum dimensions
a) smaller than 90 µm, preferred smaller than 80 µm, more preferred smaller than 70 µm, further more referred smaller than 60 µm, most preferred smaller than 50 µm and,
b) in particular, have a particle size distribution with maximum dimensions smaller than 40 µm, preferred smaller than 30 µm, more preferred smaller than 20 µm.

6. The tape as claimed in any of the preceding claims, **characterized in that**
a) a first fraction of the doped ZnO microvaristor particles has a smooth, preferably spherical shape and the particles for the first fraction have been calcinated and subsequently separated, in particular broken up, such that the particles retain their original, predominantly spherical shape and/or
b) a second fraction of the doped ZnO microvaristor particles has an irregular, in particular spiky shape and the particles for the second fraction have been produced by calcinating or sintering and subsequently fracturing such that the particles have irregular, in particular spiky, shapes .

7. The tape as claimed in any of the preceding claims, **characterized in that**
a) the substrate is in the form of a sheet and preferably a band and/or
b) the substrate is flexible and is made in the form of a film, a perforated film, a woven fabric or a fleece.

8. The tape as claimed in any of the preceding claim, **characterized in that**
a) the substrate is electrically insulating and
b) in particular that the substate contains glass and/or polymer, preferably polyester.

9. The tape as claimed in claim 8, **characterized in that** the substrate is made of a polymer and is heat- shrinkable.

10. The tape as claimed in any of the preceding claims, **characterized in that**
a) the binder is chosen among the group of epoxies and silicones and/or
b) the binder is a thermoplastic or a duromer.

11. The tape as claimed in any of the preceding claims, **characterized in that**
a) the binder in the tape is in a pre-cured B-stage or
b) the binder in the tape is in a fully-cured C-stage that facilitates handling of the tape for further processing.

12. Electrical component or device, in particular such as conductor bar, e.g. motor bar or generator bar, or such as cable termination, machine insulation, transforme insulation, support insulator, bushing or field control means, or such as medium or high voltage apparatus, e.g. disconnecter, circuit breaker, transformer, capacitor, inductor, instrument transformer, cable or electrical machine, **characterized in that** a nonlinear electrical tape is present that comprises a substrate that is impregnated with a binder containing inorganic filler particles that comprise doped zinc oxide (ZnO) microvaristor particles.

13. Electrical component or device as claimed in claim 12,
**characterized in that**
a) the tape is a flexible tape, in particular with at least one surface being self-adhesive, for applying the tape in a field-stress region of the electrical component or device and there performs a nonlinear electrical field control by means of its embedded doped ZnO microvaristor particles and/or
b) the doped ZnO microvaristor particles are to a large extent hollow particles and have a particle size distribution with maximum dimensions smaller than 70 µm, preferred smaller than 50 µm, more preferred smaller than 30 µm.

14. Electrical component, such as conductor bar, in particular motor bar or generator bar, or such as cable termination, machine insulation, transformer insulation, support insulator, bushing or field control means, or electrical device, such as medium or high voltage apparatus, in particular disconnector, circuit breaker, transformer, capacitor, inductor, instrument transformer, cable, or electrical machine, **characterized in that** a nonlinear electrical tape according to any of the claims 1-11 is present.

## Patentansprüche

1. Band mit nichtlinearen elektrischen Eigenschaften für elektrische Einrichtungen, insbesondere für elektrische Hochspannungsvorrichtungen, umfassend ein Substrat, das mit einem Bindemittel imprägniert ist, das anorganische Füllteilchen enthält, **dadurch gekennzeichnet, daß** die Füllteilchen Mikrovaristorteilchen umfassen, die dotiertes Zinkoxid (ZnO) umfassen.

2. Band nach Anspruch 1, **dadurch gekennzeichnet, daß**
a) das Band ein flexibles Band ist, wobei insbesondere mindestens eine Oberfläche selbstklebend ist, zum Aufbringen des Bandes auf elektrischen Komponenten und/oder
b) das Band geeignet ist für eine Anwendung in einem Feldstressgebiet der elektrischen Komponente und eine nichtlineare Steuerung des elektrischen Feldes mit Hilfe ihrer eingebetteten dotierten ZnO-Mikrovaristorteilchen liefert.

3. Band nach einem der vorhergehenden Ansprüche,
**dadurch gekennzeichnet, daß**
a) die dotierten ZnO-Mikrovaristorteilchen hohle Teilchen mit einer mittleren Dichte unter 5,6 g/cm³ umfassen und
b) daß insbesondere die dotierten ZnO-Mikrovaristorteilchen hohle Teilchen sind, die durch Granulierung, bevorzugt Sprühtrocknen, hergestellte hohle Teilchen sind.

4. Band nach einem der vorhergehenden Ansprüche,
**dadurch gekennzeichnet, daß**
a) mindestens 70%, bevorzugt mindestens 80%, besonders bevorzugt mindestens 90% der anorganischen Füllteilchen dotierte ZnO-Mikrovaristorteilchen sind und/oder
b) die dotierten ZnO-Mikrovaristorteilchen eine Gaußsche oder zweigipflige Teilchengrößenverteilung aufweisen.

5. Band nach einem der vorhergehenden Ansprüche, **dadurch gekennzeichnet, daß** die dotierten ZnO-Mikrovaristorteilchen eine Teilchengrößenverteilung mit maximalen Abmessungen aufweisen
a) kleiner als 90 µm, bevorzugt kleiner als 80 µm, besonders bevorzugt kleiner als 70 µm, weiter besonders bevorzugt kleiner als 60 µm, ganz besonders bevorzugt kleiner als 50 µm und
b) insbesondere eine Teilchengrößenverteilung mit maximalen Abmessungen kleiner als 40 µm, bevorzugt kleiner als 30 µm, besonders bevorzugt kleiner als 20 µm, aufweisen.

6. Band nach einem der vorhergehenden Ansprüche,
**dadurch gekennzeichnet, daß**
a) eine erste Fraktion der dotierten ZnO-Mikrovaristorteilchen eine glatte, bevorzugt kugelförmige Gestalt besitzt und die Teilchen für die erste Fraktion calciniert und danach getrennt werden, insbesondere aufgebrochen werden, so daß die Teilchen ihre ursprüngliche, vorwiegend kugelförmige Gestalt beibehalten, und/oder
b) eine zweite Fraktion der dotierten ZnO-Mikrovaristorteilchen eine unregelmäßige, insbesondere spitzige Gestalt besitzen und die Teilchen für die zweite Fraktion durch Calcinieren oder Sintern und danach Frakturieren hergestellt worden sind, so daß die Teilchen eine unregelmäßige, insbesondere spitzige, Gestalt besitzen.

7. Band nach einem der vorhergehenden Ansprüche,
**dadurch gekennzeichnet, daß**
a) das Substrat in Form einer Folie und vorzugsweise eines Streifens vorliegt und/oder
b) das Substrat flexibel ist und in Form eines Films, eines perforierten Films, eines Gewebes oder eines Vlieses hergestellt ist.

8. Band nach einem der vorhergehenden Ansprüche,
**dadurch gekennzeichnet, daß**
a) das Substrat elektrisch isolierend ist und
b) insbesondere das Substrat Glas und/oder Polymer, bevorzugt Polyester, enthält.

9. Band nach Anspruch 8, **dadurch gekennzeichnet, daß** das Substrat aus einem Polymer hergestellt ist und durch Wärme geschrumpft werden kann.

10. Band nach einem der vorhergehenden Ansprüche,
**dadurch gekennzeichnet, daß**
a) das Bindemittel ausgewählt ist unter der Gruppe aus Epoxiden und Silikonen und/oder
b) das Bindemittel ein thermoplastischer Kunststoff oder eine Duromer ist.

11. Band nach einem der vorhergehenden Ansprüche,
**dadurch gekennzeichnet, daß**
a) das Bindemittel in dem Band sich in einem vorgehärteten B-Zustand befindet oder
b) das Bindemittel in dem Band sich in einem vollständig gehärteten C-Zustand befindet, der die Handhabung des Bandes zur weiteren Verarbeitung erleichtert.

12. Elektrische Komponente oder Einrichtung, insbesondere wie etwa eine Leiterschiene, z.B. Motorschiene oder Generatorschiene, oder wie etwa ein Kabelabschluß, Maschinenisolation, Transformatorisolation, Trägerisolator, Durchführung oder Feldsteuermittel oder wie etwa Mittel- oder Hochspannungsvorrichtung, z.B. Trennschalter, Unterbrecher, Transformator, Kondensator, Induktor, Instrumententransformator, Kabel oder elektrische Maschine, **dadurch gekennzeichnet, daß** ein nichtlineares elektrisches Band vorliegt, das ein Substrat umfaßt, das mit einem Bindemittel imprägniert ist, das anorganische Füllteilchen enthält, die dotierte Zinkoxid-(ZnO)-Mikrovaristorteilchen umfassen.

13. Elektrische Komponente oder Einrichtung nach Anspruch 12, **dadurch gekennzeichnet, daß**
a) das Band ein flexibles Band ist, wobei insbesondere mindestens eine Oberfläche selbstklebend ist, zum Anbringen des Bandes in einem Feldstreßgebiet der elektrischen Komponente oder Einrichtung, und dort eine nichtlineare Steuerung eines elektrischen Feldes mit Hilfe seiner eingebetteten dotierten ZnO-Mikrovaristorteilchen durchführt, und/oder
b) die dotierten ZnO-Mikrovaristorteilchen zu einem großen Ausmaß hohle Teilchen sind und eine Teilchengrößenverteilung mit maximalen Abmessungen kleiner als 70 µm, bevorzugt kleiner als 50 µm, besonders bevorzugt kleiner als 30 µm, aufweisen.

14. Elektrische Komponente wie etwa eine Leiterschiene, insbesondere Motorschiene oder Generatorschiene oder wie etwa Kabelabschluß, Maschinenisolation, Transformatorisolation, Stützisolator, Durchführung oder Feldsteuermittel oder elektrische Einrichtung wie etwa Mittel- oder Hochspannungsvorrichtung, insbesondere Trennschalter, Unterbrecher, Transformator, Kondensator, Induktor, Instrumententransformator, Kabel oder elektrische Maschine, **dadurch gekennzeichnet, daß** ein nichtlineares elektrisches Band nach einem der Ansprüche 1-11 vorliegt.

## Revendications

1. Ruban doté de propriétés électriques non linéaires pour dispositif électriques, plus particulièrement pour appareils électriques haute tension, le ruban comprenant un substrat imprégné d'un liant contenant des particules de charge inorganiques, et étant **caractérisé en ce que** les particules de charge comprennent des particules-microvaristances contenant de l'oxyde de zinc (ZnO) dopé.

2. Ruban selon la revendication 1, **caractérisé en ce que :**
a) le ruban est un ruban souple, présentant plus particulièrement au moins une surface auto-adhésive permettant d'appliquer le ruban sur des composants électriques, et/ou
b) le ruban convient à une application dans une région de contraintes de champ des composants électriques et assure une régulation non linéaire du champ électrique grâce à ses particules-microvaristances à base de ZnO dopé incorporées.

3. Ruban selon l'une quelconque des revendications précédentes, **caractérisé en ce que :**
a) les particules-microvaristances à base de ZnO dopé comprennent des particules creuses dont la densité moyenne est inférieure à 5,6 g/cm³, et
b) plus particulièrement, les particules-microvaristances à base de ZnO dopé sont des particules creuses obtenues par granulation, de préférence par séchage par pulvérisation.

4. Ruban selon l'une quelconque des revendications précédentes, **caractérisé en ce que :**
a) au moins 70%, de préférence au moins 80%, plus préférablement au moins 90%, des particules de charge inorganiques sont des particules-microvaristances à base de ZnO dopé, et/ou
b) les particules-microvaristances à base de ZnO dopé présentent une distribution granulométrique gaussienne ou bimodale.

5. Ruban selon l'une quelconque des revendications précédentes, **caractérisé en ce que** les particules-microvaristances à base de ZnO dopé présentent une distribution granulométrique dont les dimensions maximales sont :
a) inférieures à 90 µm, de préférence inférieures à 80 µm, plus préférablement inférieures à 70 µm, plus préférablement encore inférieures à 60 µm, idéalement inférieures à 50 µm, et
b) plus particulièrement inférieures à 40 µm, de préférence inférieures à 30 µm, plus préférablement inférieures à 20 µm.

6. Ruban selon l'une quelconque des revendications précédentes, **caractérisé en ce que :**
a) un premier groupe des particules-microvaristances à base de ZnO dopé possèdent une forme lisse, de préférence sphérique, et les particules du premier groupe ont été calcinées puis séparées, plus particulièrement désagrégées, de façon à leur faire conserver leur forme de départ principalement sphérique, et/ou
b) un deuxième groupe des particules-microvaristances à base de ZnO dopé possèdent une forme irrégulière, plus particulièrement à pointes, et les particules du deuxième groupe ont été obtenues par calcination ou frittage puis fracturation de façon à leur conférer une forme irrégulière, plus particulièrement à pointes.

7. Ruban selon l'une quelconque des revendications précédentes, **caractérisé en ce que :**
a) le substrat prend la forme d'une feuille, de préférence d'une bande, et/ou
b) le substrat est souple et prend la forme d'un film, d'un film perforé, d'un textile tissé ou d'un molleton.

8. Ruban selon l'une quelconque des revendications précédentes, **caractérisé en ce que :**
a) le substrat est électriquement isolant, et
b) plus particulièrement, le substrat contient du verre et/ou un polymère, de préférence du polyester.

9. Ruban selon la revendication 8, **caractérisé en ce que** le substrat est constitué d'un polymère et est thermorétrécissable.

10. Ruban selon l'une quelconque des revendications précédentes, **caractérisé en ce que :**
a) le liant est choisi dans le groupe constitué d'époxydes et de silicones, et/ou
b) le liant est une matière thermoplastique ou un duromère.

11. Ruban selon l'une quelconque des revendications précédentes, **caractérisé en ce que :**
a) le liant dans le ruban est à l'état B prédurci, ou
b) le liant dans le ruban est à l'état C complètement durci facilitant la manipulation du ruban en vue d'un traitement plus poussé.

12. Composant ou dispositif électrique, plus particulièrement tel qu'une barre conductrice, par ex. une barre de moteur ou une barre de générateur, ou tel qu'un élément de connexion de câble, une isolation de machine, une isolation de transformateur, un isolant de support, un manchon ou un moyen de régulation de champ, ou tel qu'un appareil moyenne ou haute tension, par ex. un sectionneur, un disjoncteur, un transformateur, un condensateur, une inductance, un transformateur de mesure, un câble ou une machine électrique, **caractérisé en ce qu'**il comporte un ruban doté de propriétés électriques non linéaires comprenant un substrat imprégné d'un liant contenant des particules de charge inorganiques comprenant des particules-microvaristances contenant de l'oxyde de zinc (ZnO) dopé.

13. Composant ou dispositif électrique selon la revendication 12, **caractérisé en ce que :**
a) le ruban est un ruban souple, présentant plus particulièrement au moins une surface auto-adhésive permettant d'appliquer le ruban dans une région de contraintes de champ du composant ou dispositif électrique, et y assure une régulation non linéaire du champ électrique grâce à ses particules-microvaristances à base de ZnO dopé incorporées, et/ou
b) les particules-microvaristances à base de ZnO dopé sont dans une large mesure des particules creuses et présentent une distribution granulométrique dont les dimensions maximales sont inférieures à 70 µm, de préférence inférieures à 50 µm, et plus préférablement inférieures à 30 µm.

14. Composant électrique, tel qu'une barre conductrice, par ex. une barre de moteur ou une barre de générateur, ou tel qu'un élément de connexion de câble, une isolation de machine, une isolation de transformateur, un isolant de support, un manchon ou un moyen de régulation de champ, ou dispositif électrique, tel qu'un appareil moyenne ou haute tension, plus particulièrement un sectionneur, un disjoncteur, un transformateur, un condensateur, une inductance, un transformateur de mesure, un câble ou une machine électrique, **caractérisé en ce qu'**il comporte un ruban doté de propriétés électriques non linéaires selon l'une quelconque des revendications 1 à 11.
